# EUROPÄISCHE PATENTSCHRIFT

(11) **EP 1 500 302 B1**
(45) Veröffentlichungstag und Bekanntmachung des Hinweises auf die Patenterteilung: **03.05.2006**
(21) Anmeldenummer: 03722359.1
(22) Anmeldetag: 27.03.2003
(51) Int. Cl.: H04R 25/00, A01N 59/16, A01N 25/10, A61L 27/00

(54) **HÖRGERÄT ODER HÖRGERÄTETEILE ZUM EINSATZ IN DEN GEHÖRGANG UND/ODER DIE OHRMUSCHEL EINES TRÄGERS**
HEARING AID OR HEARING AID PARTS FOR INSERTING INTO THE AUDITORY CANAL AND/OR THE AURICLE OF A WEARER
PROTHESE AUDITIVE OU PIECES DE PROTHESE AUDITIVE A PLACER DANS LE CONDUIT AUDITIF OU DANS LE PAVILLON DE L'OREILLE D'UN PORTEUR DE PROTHESE

(30) Priorität: 02.05.2002 DE 10219679
(43) Veröffentlichungstag der Anmeldung: 26.01.2005
(73) Patentinhaber: AS Audio Service GmbH, 32051 Herford (DE)
(72) Erfinder: BULK, Michael, 32051 Herford (DE); ROHR, Michael, 32130 Enger (DE); SCHMIDT, Helmut, 66130 Saarbrücken-Güdingen (DE); BECKER-WILLINGER, Carsten, 66130 Saarbrücken (DE)
(74) Vertreter: Elbertzhagen, Otto
(86) Internationale Anmeldenummer: PCT/EP2003/003165
(87) Internationale Veröffentlichungsnummer: WO 2003/094574

(56) Entgegenhaltungen:
- WO-A-01/00021
- WO-A-01/43500
- DE-A- 4 118 184
- US-A- 5 530 763
- US-A- 6 120 587

## Beschreibung

### TECHNISCHES GEBIET

Die Erfindung betrifft ein Hörgerät oder ein Hörgeräteteil, das zum Einsatz in den Gehörgang und/oder in bzw. hinter die Ohrmuschel eines Trägers bestimmt ist.

### STAND DER TECHNIK

An die Ohrmuschel und/oder den Gehörgang angepaßte Hörgeräte bzw. Hörgeräteteile werden teilweise auch als Otoplastik bezeichnet. Im Fachsprachengebrauch hat es sich jedoch durchgesetzt, unter einer Otoplastik lediglich denjenigen Teil eines Hinter-dem-Ohr-Geräts (HdO-Geräts) zu verstehen, der in den Gehörgang eingesetzt wird. Nach dem in letzter Zeit maßgeblichen Sprachgebrauch ist die Bezeichnung des Erfindungsgegenstands als "Otoplastik" zu eng. Bei dem Gegenstand der Erfindung geht es vielmehr um sämtliche Hörgeräte und Hörgeräteteile, die mit der Haut des Trägers bzw. der Trägerin in Berührung kommt.

Neben den HdO-Geräten, die als elektrische bzw. elektronische Geräte zur Verbesserung des Hörvermögens üblicherweise ein Mikrophon, einen Verstärker, einen Lautsprecher und ggf. weitere Elektronik, wie einen Mikroprozessor umfassen, deren elektrischer bzw. elektronischer Teil hinter dem Ohr getragen wird, und die über einen Schlauch mit einem heute als Otoplastik bezeichneten, im Gehörgang angeordneten Ohrstopfen verbunden sind, sind am weitesten verbreitet gegenwärtig sogenannte Im-Ohr-Hörgeräte. Bei solchen Im-Ohr-Hörgeräten, die möglichst klein ausgebildet sein sollen, ist das gesamte Hörgerät von einer Schale umschlossen, deren Außenkontur an die Innenkontur des Gehörgangs angepaßt ist.

Die Versorgung mit Hörgeräten der vorstehend beschriebenen Art ist in vielen Fällen problematisch. Das Tragen der Hörgeräte kann verschiedene unerwünschte Reaktionen auslösen. Neben Entzündungen oder allergischen Reaktionen, die möglicherweise durch ständige, besonders sorgfältige Reinigung der Kontaktbereiche der Außenoberfläche der Hörgeräte bekämpft werden können, gibt es Probleme mit Patienten, die an otitis externa leiden. Patienten mit dieser Krankheit können gegenwärtig überhaupt nicht mit Hörgeräten versorgt werden.

Im Gehörgang wird umgangssprachlich auch als Ohrenschmalz bezeichnetes Cerumen gebildet. Sowohl dieses Cerumen als auch andere Absonderungen können sich auf den Kontaktbereichen des Hörgeräts bzw. von Hörgeräteteilen absetzen. Dies führt zu einem Belag, der auch als Biofilm bezeichnet wird, in den sich Mikroorganismen einnisten können. Aufgrund dieser Erscheinung müssen die Kontaktbereiche der Hörgeräte bzw. Hörgeräteteile mit der Haut des Trägers zur Entfernung des Biofilms häufig gereinigt werden. Da der Biofilm schwer zu entfernen ist und relativ rasch nachgebildet wird, läßt sich bei längerem Gebrauch das Entstehen des Biofilms nicht mit ausreichender Sicherheit vermeiden.

### DIE ERFINDUNG

Ausgehend von dem vorstehend erläuterten Stand der Technik liegt der Erfindung die Aufgabe zugrunde, ein Hörgerät oder Hörgeräteteile nach dem Oberbegriff des Patentanspuchs 1 zu schaffen, das besonders hautverträglich auch für Problempatienten ist und dessen mit der Haut des Trägers in Kontakt befindliche Bereiche besonders einfach und schnell gereinigt bzw. rein gehalten werden können. Es soll insb. auch die Bildung eines Biofilms vermieden werden.

Die Lösung dieser Aufgabe erfolgt mit den Merkmalen des Patentanspruchs 1.

Es hat sich überraschend erwiesen, daß das Aufbringen einer Beschichtung aus mit einem mit organischen Gruppen modifizierten anorganischen Kondensat der im Patentanspruch 1 beschriebenen Art eine drastische Verbesserung bei der Lösung der geschilderten Probleme mit sich bringt. Die Beschichtung der Oberfläche von Hörgeräten oder Hörgeräteteilen mit einem derartigen Material führt dazu, daß die Bildung eines Biofilms auf dem Hörgerät bzw. Hörgeräteteil bei Gebrauch deutlich gehemmt oder sogar gänzlich vermieden wird. Die entsprechende Beschichtung erlaubt es auch, Problempatienten mit Hörgeräten zu versorgen, für die bisher eine Versorgung nicht in Frage kam, wie beispielsweise Patienten, die an einer otitis externa leiden.

Durch das Aufbringen der Beschichtung auf die Außenoberfläche des Hörgeräts oder Hörgeräteteils wird die Gefahr von Entzündungen im Ohr oder an der Ohrmuschel ebenso beträchtlich verringert, wie die Gefahr von allergischen Reaktionen. Der Einsatz von Kondensaten, deren organische Gruppen zumindest teilweise Fluoratome aufweisen, verhindert dabei insb. das Anwachsen des Biofilms auf der Otoplastik wegen der Antihafteigenschaft oder Easy-to-Clean-Eigenschaft. Die Anwesenheit von Kupfer- oder Silberkolloiden in der Beschichtung verhindert insb. das Weiterwachsen eines Biofilms wegen deren mikrobizider Wirkung. Durch eine Kombination von Kondensaten mit fluorhaltigen organischen Gruppen und der Anwesenheit von Kupfer- oder Silberkolloiden in der Beschichtung werden sowohl der Biofilm-hemmende Effekt als auch der antiallergische Effekt in synergetischer Weise verbessert, so daß eine solche Kombination eine besonders bevorzugte Ausführungsform darstellt.

Die Hörgeräte oder Hörgeräteteile, die mit der äußeren Beschichtung versehen werden, können aus jedem geeigneten und auch herkömmlicherweise bereits verwendeten Material gefertigt sein. Üblicherweise ist dieses Material Kunststoff, vorzugsweise Polymethylmethacrylat (PMMA). Beispiele für andere geeignete Kunststoffe sind Polyethylen, Polypropylen, Polyacrylate wie Polymethylacrylat, Polyvinylbutyral oder Polycarbonat. Die Hörgerätegehäuse oder Hörgeräteteile können aus einem einzigen Material bestehen, jedoch auch aus mehreren, aus unterschiedlichen Materialien bestehenden Teilen zusammengesetzt sein. Die Hörgerätegehäuse oder Hörgeräteteile können an ihrer Oberfläche vor Aufbringen der Beschichtung ganz oder teilweise verglast, vergoldet oder galvanisiert sein. Die Beschichtung wird insb. bei den in den Gehörgang eingesetzten Teilen oder Bereichen des Hörgeräts verwendet.

Eine derartige Beschichtung kann auf die gesamte Oberfläche des Hörgeräts oder Hörgeräteteils aufgebracht sein. Bei unkritischen Flächen, bei denen nicht die Bildung eines Biofilms bzw. kein Kontakt mit der Haut des Trägers zu erwarten sind, kann eine Beschichtung entfallen, ebenfalls im Inneren einer Hohlschale, obwohl auch dort eine Beschichtung möglich ist. Es genügt unter Umständen, auch nur Teile der Hörgeräte oder Hörgeräteteile mit der Beschichtung zu versehen.

Die Hörgeräte bzw. Hörgeräteteile können in üblicher Weise vorbehandelt, z.B. gereinigt oder entfettet werden, um eine gute Haftung mit der aufzubringenden Beschichtung zu erreichen. Selbstverständlich wird dann, wenn nur ein Teilbereich des Hörgeräts oder Hörgeräteteils beschichtet werden soll, der Teilbereich bzw. das entsprechende Teil zunächst separat beschichtet und dann zum fertigen Gerät bzw. Geräteteil zusammengefügt. In einer bevorzugten Ausführungsform wird das Hörgerät oder Hörgeräteteil, auf das die Beschichtung aufgebracht wird, zunächst mit einem Haftvermittler oder einer Grundierung versehen. Die Beschichtung kann durch das Auftragen einer nachstehend erläuterten Beschichtungszusammensetzung auf das Hörgerät oder Hörgeräteteil und die anschließende Behandlung mit Wärme und/oder Strahlung erhalten werden. Vorzugsweise wird eine lichthärtende Beschichtungszusammensetzung eingesetzt.

Die eingesetzte Beschichtungszusammensetzung (Lack) umfaßt ein Hydrolysat oder Vorkondensat auf Basis von einer oder mehreren hydrolysierbaren Verbindungen mit mindestens einem nicht-hydrolysierbaren Substituenten. Der nicht-hydrolysierbare Substituent ist insb. ein organischer Substituent (kohlenstoffhaltig). Vorzugsweise umfaßt die Beschichtungszusammensetzung mindestens ein hydrolysierbares Silan mit mindestens einem nicht-hydrolysierbaren Substituenten als hydrolysierbare Verbindung.

Das Hydrolysat oder Vorkondensat wird bevorzugt durch teilweise Hydrolyse oder Kondensation von einem oder mehreren Silanen der allgemeinen Formel (I)

RₐSiX₍₄₋ₐ₎ (I)

erhalten, worin die Reste R gleich oder verschieden sind und nicht-hydrolysierbare Gruppen darstellen, die Reste X gleich oder verschieden sind und hydrolysierbare Gruppen oder Hydroxylgruppen bedeuten und a den Wert 1, 2 oder 3 hat, wobei ein Wert von 1 bevorzugt ist.

Bei den Organosilanen der Formel (I) sind die hydrolysierbaren Gruppen X beispielsweise Wasserstoff oder Halogen (F, Cl, Br oder I, insb. Cl und Br), Alkoxy (vorzugsweise C₁₋₆-Alkoxy, insb. C₁₋₄-Alkoxy, wie z.B. Methoxy, Ethoxy, n-Propoxy, i-Propoxy, n-Butoxy, i-Butoxy, sek.-Butoxy und tert.-Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino, wobei die Alkylgruppen vorzugsweise 1 bis 12, insb. 1 bis 6 Kohlenstoffatome, aufweisen. Bevorzugte hydrolysierbare Reste sind Halogen, Alkoxygruppen und Acyloxygruppen. Besonders bevorzugte hydrolysierbare Reste sind Alkoxygruppen, insb. Methoxy und Ethoxy.

R ist ein nicht-hydrolysierbarer organischer Rest, der ggf. eine funktionelle Gruppe tragen kann. Beispiele für R sind Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl).

Spezielle Beispiele für funktionelle Gruppen des Restes R sind, neben den bereits vorstehend genannten Gruppen mit ungesättigten C-C-Bindungen, die Epoxy-, Hydroxy-, Ether-, Amino-, Monoalkylamino-, Dialkylamino-, z.B. mit den vorstehend definierten C₁₋₆-Alkylgruppen, Amid-, Carboxy-, Mercapto-, Thioether-, Vinyl-, Isocyanat-, Acryloxy-, Methacryloxy-, Säureanhydrid-, Säurehalogenid-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R enthalten vorzugsweise 1 bis 18, insb. 1 bis 8 Kohlenstoffatome. Die genannten Reste R und X können ggf. einen oder mehrere übliche Substituenten, wie z.B. Halogen oder Alkoxy, aufweisen.

Bevorzugt enthält mindestens eines der eingesetzten hydrolysierbaren Silane mit mindestens einem nicht-hydrolysierbaren Substituenten an dem nicht-hydrolysierbaren Substituenten eine der vorstehend genannten funktionellen Gruppen. Über diese funktionelle Gruppe kann dann eine Vernetzung erfolgen, z.B. durch Reaktion der funktionellen Gruppen an den Silanen untereinander, wobei unterschiedliche oder gleiche funktionelle Gruppen miteinander reagieren können, oder mit funktionellen Gruppen an den nachstehend beschriebenen organischen Verbindungen, die ebenfalls in der Beschichtungszusammensetzung enthalten sein können. Die Vernetzung über die funktionellen Gruppen führt zu einer Härtung über die im Kondensat befindlichen organischen Gruppen (organische Vernetzung).

Bevorzugte funktionelle Gruppen sind Kohlenstoff-Kohlenstoff-Doppelbindungen sowie die Epoxid-, Säureanhydrid- und Aminogruppe, wobei der Einsatz von Kohlenstoff-Kohlenstoff-Doppelbindungen als funktionelle Gruppe besonders bevorzugt ist.

Bei den eingesetzten Verbindungen mit Kohlenstoff-Kohlenstoff-Doppelbindungen als funktioneller Gruppe handelt es sich insb. um Silane der allgemeinen Formel (I), worin der Rest R eine reaktive polymerisierbare Doppelbindung aufweist. Bevorzugt handelt es sich um ein Silan der allgemeinen Formel (I), worin X und a wie vorstehend definiert sind (X ist bevorzugt Methoxy oder Ethoxy, a ist bevorzugt 1) und R ein nicht-hydrolysierbarer Rest, z. B. ein aliphatischer, cycloaliphatischer oder aromatischer Rest, insb. Alkylen, z. B. C₁-C₆-Alkylen, wie Methylen, Ethylen, Propylen und Butylen, mit einer Vinyl-, (Meth)acryl- oder (Meth)acryloxygruppe ist. Der Rest R ist bevorzugt ein (Meth)acryloxy-(C₁₋₆)-alkylen-Rest wie z.B. (Meth)acryloxypropyl. Konkrete Beispiele sind Vinyltriethoxysilan, Vinyltrimethoxysilan, Methacryloxypropyltrimethoxysilan (MPTS), Methacryloxypropyltriethoxysilan, Acryloxypropyltrimethoxysilan und Acryloxypropyltriethoxysilan.

Beispiele für Silane mit einer Epoxidgruppe sind Epoxysilane der obigen allgemeinen Formel (I), worin a einen Wert von 1 hat, X vorzugsweise C₁₋₄-Alkoxy, besonders bevorzugt Methoxy und Ethoxy, ist und R ein nicht-hydrolysierbarer Rest mit mindestens einer Epoxidgruppe ist, z. B. ein aliphatischer, cycloaliphatischer oder aromatischer Rest, insb. Alkylen, z. B. C₁-C₆-Alkylen, wie Methylen, Ethylen, Propylen und Butylen, mit mindestens einer Epoxidgruppe. Der Rest R ist bevorzugt ein Glycidyloxy-(C₁₋₆)-alkylen-Rest wie z.B. γ-Glycidyloxypropyl. Beispiele sind γ-Glycidyloxypropyltrimethoxysilan (GPTS) und γ-Glycidyloxypropyltriethoxysilan (GPTES).

Beispiele für Aminosilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht-hydrolysierbarer Rest mit mindestens einer Aminogruppe ist, z. B. ein aliphatischer, cycloaliphatischer oder aromatischer Rest, insb. Alkylen, z.B. C₁-C₆-Alkylen, wie Methylen, Ethylen, Propylen und Butylen, mit mindestens einer primären, sekundären oder tertiären Aminogruppe. Beispielsweise ist R eine R¹₂N-(Alkylen-NR¹)ₓ-alkylen-Rest, worin x 0 bis 5 ist, die Alkylengruppen gleich oder verschieden sein können und insb. die vorstehend genannten sein können, und R¹ gleich oder verschieden ist und Wasserstoff oder ein ggf. substituierter Alkylrest, z.B. die in obiger allgemeinen Formel (I) genannten, ist. R¹ kann auch ein zweiwertiger Rest, z.B. Alkylen, unter Bildung eines heterocyclischen Rings sein. Ggf. kann auch ein weiterer nicht-hydrolysierbarer Rest, z.B. Alkyl, vorhanden sein (a = 2). Konkrete Beispiele für derartige Silane sind 3-Aminopropyltrimethoxysilan (APTS), 3-Aminopropyltriethoxysilan, N-(2-Aminoethyl)-3-aminopropyltrimethoxysilan, N-[N'-(2'-Aminoethyl)-2-aminoethyl]-3-aminopropyltrimethoxysilan, N-[3-(Triethoxysilyl)-propyl]-4,5-dihydroimidazol und [N-(2-Aminoethyl)-3-aminopropyl]-methyldiethoxysilan.

Beispiele für Anhydridsilane sind solche der obigen allgemeinen Formel (I), worin a einen Wert von 1 aufweist, X vorzugsweise C₁₋₄-Alkoxy, besonders bevorzugt Methoxy und Ethoxy, ist und R ein nicht-hydrolysierbarer Rest mit mindestens einer Anhydridgruppe ist, z.B. eine aliphatischer, cycloaliphatischer oder aromatischer Rest, insb. Alkylen, z.B. C₁-C₆-Alkylen, insb. C₁-C₄-Alkylen, wie Methylen, Ethylen, Propylen und Butylen, mit einer Anhydridgruppe. Bei der Anhydridgruppe, die ebenso wie die Epoxidgruppe zur Kondensation mit Aminogruppen befähigt ist, kann es sich z.B. um Reste handeln, die sich von Carbonsäureanhydriden, wie Bernsteinsäureanhydrid, Maleinsäureanhydrid oder Phthalsäureanhydrid, ableiten, die über einen der vorstehend genannten Reste, insb. C₁-C₄-Alkylen mit dem Siliciumatom verbunden sind. Beispiele sind [3-(Triethoxysilyl)propyl] bernstein-säureanhydrid (Dihydro-3-(3-triethoxysilyl) propyl)-2,5-furandion, GF20) und [3-(Trimethoxysilyl)-propyl]bernsteinsäureanhydrid.

Nach einer Ausführungsform der Erfindung ist in der Biofilm-hemmenden Beschichtung zumindest ein Teil der organischen Gruppen des anorganischen Kondensats mit Fluor substituiert.

Hierfür umfassen die in der Beschichtungszusammensetzung eingesetzten hydrolysierbaren Verbindungen ein oder mehrere hydrolysierbare Silane mit mindestens einer fluorhaltigen nicht-hydrolysierbaren Gruppe. Derartige Silane sind z.B. in WO 92/21729 oder in DE 4118184 detailliert beschrieben, worauf Bezug genommen wird. Die Verwendung eines derartigen fluorierten Silans führt zu hydrophoben und oleophoben Eigenschaften der Beschichtung.

Hierfür können vorzugsweise hydrolysierbare Silanverbindungen mit mindestens einem nicht-hydrolysierbaren Rest eingesetzt werden, die die allgemeine Formel

Rf(R)_{b}SiX_{(3-b)} (II)

aufweisen, worin X und R wie in Formel (I) definiert sind, Rf eine nicht-hydrolysierbare Gruppe ist, die 1 bis 30 Fluoratome an Kohlenstoffatome gebunden aufweist, die vorzugsweise durch mindestens zwei Atome, vorzugsweise eine Ethylengruppe, von Si getrennt sind, und b 0, 1 oder 2 ist. R ist insb. ein Rest ohne funktionelle Gruppe, bevorzugt eine Alkylgruppe wie Methyl oder Ethyl. Vorzugsweise enthalten die Gruppen Rf mindestens 2, 3, 5 oder 8 Fluoratome und nicht mehr als 25, 21 oder 18 Fluoratome, die an aliphatische oder cycloaliphatische Kohlenstoffatome gebunden sind. Rf ist vorzugsweise eine fluorierte Alkylgruppe mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂.

Fluoratome, die ggf. an aromatische Kohlenstoffatome gebunden sind (z.B. im Falle von C₆F₄), werden nicht berücksichtigt. Bei der fluorhaltigen Gruppe Rf kann es sich auch um einen Chelatliganden handeln. Ebenso ist es möglich, daß sich ein oder mehrere Fluoratome an einem Kohlenstoffatom befinden, von dem eine Doppel- oder Dreifachbindung ausgeht. Beispiele für einsetzbare Fluorsilane sind CF₃CH₂CH₂SiCl₂ (CH₃), CF₃CH₂CH₂SiCl(CH₃)₂, CF₃CH₂CH₂Si(CH₃)(OCH₃)₂, C₂F₅₋CH₂CH₂-SiZ₃, n-C₆F₁₃-CH₂CH₂SiZ₃, n-C₈F₁₇-CH₂CH₂-SiZ₃, n-C₁₀F₂₁₋CH₂CH₂-SiZ₃, worin Z = OCH₃, OC₂H₅ oder Cl; i-C₃F₇O-CH₂CH₂CH₂₋SiCl₂(CH₃), n-C₆F₁₃-CH₂CH₂-Si(OCH₂CH₃)₂, n-C₆F₁₃-CH₂CH₂-SiCl₂ (CH₃) und n-C₆F₁₃-CH₂CH₂-SiCl(CH₃)₂.

Sofern in dem Kondensat fluorhaltige organische Gruppen enthalten sein sollen, sind gewöhnlich nicht weniger als 0,1 Mol-%, insb. nicht weniger als 0,5 Mol-%, bevorzugt nicht weniger als 1 Mol-%, bevorzugter nicht weniger als 2 Mol-% und am meisten bevorzugt nicht weniger als 4 Mol-% sowie gewöhnlich 100 Mol-% oder weniger, insb. nicht mehr als 50 Mol-%, bevorzugt nicht mehr als 30 Mol-% und bevorzugter nicht mehr als 15 Mol-% aller nicht-hydrolysierbaren Gruppen der in der Beschichtungszusammensetzung eingesetzten hydrolysierbaren Verbindungen Gruppen, die ein oder mehrere Fluoratome aufweisen. Diese Anteile sind auch bevorzugt, wenn zusätzlich Kupfer- oder Silberkolloide in der Beschichtung enthalten sind.

Von den eingesetzten hydrolysierbaren Silanen mit mindestens einem nicht-hydrolysierbaren Substituenten für das Hydrolysat oder Vorkondensat weisen bevorzugt mindestens 40 Mol-%, bevorzugt mindestens 70 Mol-%, besonders bevorzugt mindestens 90 Mol-%, an mindestens einem nicht-hydrolysierbaren Substituenten mindestens eine funktionelle Gruppe auf. In einer bevorzugten Ausführungsform besitzen mit Ausnahme der ggf. eingesetzten fluorhaltigen Silane alle anderen eingesetzten hydrolysierbaren Silane mit mindestens einem nicht-hydrolysierbaren Substituenten an mindestens einem nicht-hydrolysierbaren Substituenten mindestens eine funktionelle Gruppe, über die eine Vernetzung möglich ist.

Für die Herstellung des Hydrolysats oder Vorkondensats können ggf. weitere hydrolysierbare Verbindungen eines Elements M ohne nicht-hydrolysierbare Gruppen als Matrixbildner eingesetzt werden. Dabei handelt es sich insb. um Verbindungen von glas- oder keramikbildenden Elementen, insb. Verbindungen mindestens eines Elements M aus den Hauptgruppen III bis V und/ oder den Nebengruppen II bis IV des Periodensystems der Elemente. Vorzugsweise handelt es sich um hydrolysierbare Verbindungen von Si, A1, B, Sn, Ti, Zr, V oder Zn, insb. solche von Si, Al, Ti oder Zr, oder Mischungen aus zwei oder mehreren dieser Elemente. Hierzu sei angemerkt, daß selbstverständlich auch andere hydrolysierbare Verbindungen eingesetzt werden können, insb. solche von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthaniden können verwendet werden. Vorzugsweise machen diese hydrolysierbare Verbindungen ohne nicht-hydrolysierbare Gruppe aber nicht mehr als 40 und insb. nicht mehr als 20 Mol-% und insb. 0 Mol-% der insgesamt eingesetzten hydrolysierbaren monomeren Verbindungen aus. Bei Einsatz hochreaktiver hydrolysierbarer Verbindungen (z.B. Aluminiumverbindungen) empfiehlt sich die Verwendung von Komplexbildnern, die eine spontane Ausfällung der entsprechenden Hydrolysate nach Zugabe von Wasser verhindern. In der WO 92/21729 sind geeignete Komplexbildner genannt, die bei reaktiven hydrolysierbaren Verbindungen eingesetzt werden können.

Diese Verbindungen weisen insb. die allgemeine Formel MXₙ auf, worin M das vorstehend definierte Element ist, X wie in Formel (I) definiert ist, wobei zwei Gruppen X durch eine Oxogruppe ersetzt sein können, und n der Wertigkeit des Elements entspricht und meist 3 oder 4 ist. Bevorzugt werden Alkoxide von Si, Zr und Ti verwendet. Beschichtungszusammensetzungen auf Basis hydrolysierbarer Verbindungen mit nicht-hydrolysierbaren Gruppen und hydrolysierbaren Verbindungen ohne nicht-hydrolysierbare Gruppen sind z.B. in WO 95/31413 (DE 4417405) beschrieben, auf die hiermit Bezug genommen wird.

Als zusätzliche Verbindungen ohne nicht-hydrolysierbare Gruppen eignen sich insb. hydrolysierbare Silane, die z.B. die Formel

SiX₄ (III)

aufweisen, wobei X wie in Formel (I) definiert ist. Konkrete Beispiele sind Si(OCH₃)₄, Si(OC₂H₅)₄, Si(O-n- oder i-C₃H₇)₄, Si(OC₄H₉)₄, SiCl₄, HSiCl₃, Si(OOCC₃H)₄. Von diesen Silanen sind insb. Tetramethoxysilan und Tetraethoxysilan bevorzugt.

In einer anderen Ausführungsform der Erfindung sind in der Biofilm-hemmenden Beschichtung Kupfer- oder bevorzugt Silberkolloide enthalten. Hierfür können entsprechende Kupfer- oder Silberkolloide in die Beschichtungszusammensetzung eingebracht werden, so daß nach Auftrag der Beschichtungszusammensetzung und Trocknung bzw. Härtung eine Beschichtung mit Kupfer- oder Silberkolloiden in der mit organischen Gruppen modifizierten anorganischen Kondensatmatrix gebildet wird.

Die Kupfer- oder Silberkolloide werden aber vorzugsweise in der Beschichtungszusammensetzung in situ aus Kupfer- oder Silberverbindungen gebildet. Dies kann durch Behandlung mit Wärme und/oder Strahlung erfolgen, wobei die Behandlung vor Auftrag oder vorzugsweise nach Auftrag der Beschichtungszusammensetzung, also zusammen mit der Trocknung bzw. Härtung der Beschichtung, oder vor und nach Auftrag erfolgt.

Die Beschichtungszusammensetzung umfaßt in diesem Fall mindestens eine Kupfer- oder Silberverbindung. Dabei kann es sich um in Wasser oder organischen Lösungsmitteln lösliche Kupfer- oder Silberverbindungen handeln, z.B. AgNO₃ oder CuSO₄, bevorzugt werden die Kupfer- oder Silberionen aber in Form von Komplexverbindungen und insb. Chelatkomplex-Verbindungen eingesetzt. Die Kupfer- oder Silber(I)-Ionen bzw. die Kupfer- oder Silber-Komplexverbindungen können unter reduzierenden Bedingungen zu Metall-Kolloiden reagieren. Beispiele für Komplexbildner, die mit Kupfer- oder Silber(I)-Ionen eine Kupfer- oder Silber-Komplexverbindung bilden, sind Halogenidionen, wie Iodid, Bromid und insb. Chlorid (bzw. die entsprechenden Halogenwasserstoffsäuren), Thioverbindungen, Thiocyanoverbindungen, Zucker, wie Pentosen und Hexosen, z.B. Glucose, β-Dicarbonylverbindungen, wie Diketone, z.B. Acetylacetonate, Ketoester, z.B. Acetessigsäurester und Allylacetoacetat, Etheralkohole, Carbonsäuren, Carboxylate, z.B. Acetat, Citrat oder Glycolat, Betaine, Diole, Polyole, auch polymere wie Polyalkylenglycole, Kronenether, Phosphorverbindungen und Aminoverbindungen. Besonders bevorzugt werden Aminoverbindungen, wie Aminosilane, Mono-, Di-, Tri-, Tetraamine und höhere Polyamine, als Komplexbildner verwendet. Beispiele für organische Amine sind Triethylentetramin, Diethylentriamin und Ethylendiamin. Beispiele für Aminosilane sind 3-Aminopropyltri(m)ethoxysilan und insb. 2-Aminoethyl-3-aminopropyltrimethoxysilan (DIAMO), 2-Aminoethyl-3-aminopropyltriethoxysilan, Aminohexyl-3-aminopropyltrimethoxysilan und Aminohexyl-3-aminopropyltriethoxysilan. Vorzugsweise werden Kupferdiamin- oder Silberdiamin-Komplexverbindungen eingesetzt, wobei Komplexbildner mit mindestens zwei Aminogruppen, die Chelatkomplexe bilden können, sich besonders eignen. Von den Amino-Komplexbildnern sind die Aminosilane besonders bevorzugt. Diese werden in vorteilhafter Weise in die sich bildende Matrix eingebaut, was zur Stabilisierung der Kupfer- oder Silberkolloide beitragen kann.

Bei Verwendung eines Komplexbildners beträgt das stöchiometrische Verhältnis von Cu bzw. Ag zu vorhandenen komplexierenden Gruppierungen vorzugsweise 1:0,1 bis 1:500, insb. 1:1 bis 1:200. Die Komplexbildner können zumindest teilweise auch als Reduktionsmittel für die Kupfer- oder Silberionen fungieren. Weiter kommen ggf. die nachstehend beschriebenen Lösungsmittel, z.B. Alkohole oder Ketone, die sich bei der Hydrolyse und Kondensation bildenden Nebenprodukte, z.B. Alkohole, die eingesetzten hydrolysierbaren Verbindungen oder eine Kombination derselben als Reduktionsmittel in Betracht.

Die Beschichtungszusammensetzung kann in einer bevorzugten Ausführungsform ferner nanoskalige anorganische Feststoffteilchen enthalten, die eine erhöhte mechanische Festigkeit (Kratzfestigkeit, Härte) der Beschichtung ergeben. Da bei längerem Gebrauch mögliche Kratzer aufgrund der Unebenheit die Biofilmbildung fördern können, unterstützen diese Nanopartikel ebenfalls das Biofilm-hemmende Verhalten.

Sie besitzen im allgemeinen eine Teilchengröße im Bereich von 1 bis 300 nm oder 1 bis 100 nm, vorzugsweise 2 bis 50 nm und besonders bevorzugt 5 bis 20 nm. Dieses Material kann in Form eines Pulvers eingesetzt werden, es wird jedoch vorzugsweise in Form eines, insb. sauer oder alkalisch, stabilisierten Sols verwendet. Die nanoskaligen anorganischen Feststoffteilchen können aus beliebigen anorganischen Materialien bestehen, insb. bestehen sie jedoch aus Metallen oder Metallverbindungen wie beispielsweise (ggf. hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃, Chalkogeniden, Nitriden, Phosphiden, Phosphaten, Silikaten, Zirkonaten, Aluminaten oder Carbiden. Bei den nanoskaligen anorganischen Feststoffteilchen handelt es sich bevorzugt um ein Oxid, Oxidhydrat, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, Ti und Zr. Besonders bevorzugt werden Oxide bzw. Oxidhydrate eingesetzt. Bevorzugte nanoskalige anorganische Feststoffteilchen sind SiO₂, Al₂O₃, ITO, ATO, AlOOH, ZrO₂ und TiO₂. Beispiele für nanoskalige SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil-Produkte von Degussa.

Bei den nanoskaligen anorganischen Feststoffteilchen kann es sich um mit organischen Oberflächengruppen modifizierte nanoskalige anorganische Feststoffteilchen handeln. Bei der Oberflächenmodifizierung von nanoskaligen Feststoffteilchen handelt es sich um ein bekanntes Verfahren, wie es z.B. in WO 93/21127 (DE 4212633) und WO 98/51747 (DE 19746885) beschrieben ist.

Die nanoskaligen anorganischen Feststoffteilchen können in einer Menge von 1 bis zu 50 Gew.-%, bezogen auf die Festkomponenten der Beschichtungszusammensetzung, eingesetzt werden. Im allgemeinen liegt der Gehalt an nanoskaligen anorganischen Feststoffteilchen im Bereich von 1 bis 30 Gew.-%.

In der Beschichtungszusammensetzung können weitere Additive enthalten sein, die in der Technik üblicherweise je nach Zweck und gewünschten Eigenschaften zugegeben werden. Konkrete Beispiele sind organische Verbindungen, Vernetzungsmittel, Lösungsmittel, organische und anorganische Farbpigmente, Farbstoffe, UV-Absorber, Gleitmittel, Verlaufsmittel, Netzmittel, Haftvermittler und Starter. Der Starter kann zur thermisch oder photochemisch induzierten Vernetzung dienen.

Ggf. können organische Verbindungen bzw. Vernetzungsmittel zur Beschichtungszusammensetzung zugegeben werden. Dabei kann es sich um organische Monomere, Oligomere oder Polymere handeln, die insb. mindestens zwei funktionelle Gruppen enthalten, die mit den funktionellen Gruppen der eingesetzten hydrolysierbaren Silane unter Bildung einer organischen Vernetzung reagieren können. Es handelt sich z. B. um aliphatische, cycloaliphatische oder aromatische Verbindungen. Bevorzugt eingesetzt werden organische Verbindungen mit mindestens zwei Kohlenstoff-Kohlenstoff-Doppel- oder Dreifachbindungen, mindestens zwei Epoxidgruppen oder mindestens zwei Aminogruppen, wobei Kohlenstoff-Kohlenstoff-Doppelbindungen besonders bevorzugt sind. Beispiele für derartige organische Verbindungen sind Verbindungen mit mindestens zwei Acryloxy-, Methacryloxy-, Glycidyloxy-, Epoxid-, Hydroxyl- und/oder Aminogruppen. Die organische Verbindung wird vorzugsweise in einer Menge von nicht mehr als 30 Gew.-%, bezogen auf den Feststoffgehalt der Beschichtungszusammensetzung, eingesetzt.

Beispiele für organische Verbindungen mit mindestens zwei Kohlenstoff-Kohlenstoff-Doppelbindungen sind 1,6-Hexandioldimethacrylat, 1,6-Hexandioldiacrylat, Bisphenol A-bisacrylat, Bisphenol A-bismethacrylat, Trimethylolpropantriacrylat, Trimethylolpropantrimethacrylat, Neopentylglycoldimethacrylat, Neopentylglycoldiacrylat, Diethylenglycoldiacrylat, Diethylenglycoldimethacrylat, Triethylenglycoldiacrylat, Diethylenglycoldimethacrylat, Tetraethylenglycoldiacrylat, Tetraethylenglycoldimethacrylat, Polyethylenglycoldiacrylat, Polyethylenglycoldimethacrylat, 2,2,3,3-Tetrafluor-1,4-butandioldiacrylat und -dimethacrylat, 1,1,5, 5-Tetrahydroperfluorpentyl-1,5-diacrylat und -dimethacrylat, Hexafluorbisphenol A-Diacrylat und -Dimethacrylat, Octafluorhexandiol-1,6-diacrylat und -dimethacrylat, 1,3-Bis(3-methacryloxypropyl)tetrakis(trimethylsiloxy)-disiloxan, 1,3-Bis(3-acryloxypropyl)tetrakis(trimethylsiloxy)disiloxan, 1,3-Bis(3-methacryloxypropyl)tetramethyldisiloxan und 1,3-Bis(3-acryloxypropyl) tetramethyldisiloxan.

Einsetzbare organische Epoxidverbindungen können z.B. von aliphatischen, cycloaliphatischen oder aromatischen Estern oder Ethern oder Mischungen davon, z.B. auf Basis von Ethylenglycol, 1,4-Butandiol, Propylenglycol, 1,6-Hexandiol, Cyclohexandimethanol, Pentaerythrit, Bisphenol A, Bisphenol F oder Glycerin, abgeleitet sein. Konkrete Beispiele für organische Verbindungen mit mindestens zwei Epoxidgruppen sind 3,4-Epoxycyclohexylmethyl-3,4-epoxycyclohexancarboxylat, Bis-(3,4-epoxycyclohexyl)adipat, 1,4-Butandiolglycidether, Cyclohexandimethanoldiglycidether, Glycerintriglycidether, Neopentylglycoldiglycidether, Pentaerythritpolyglycidether, 2-Ethylhexylglycidether, 1,6-Hexandioldiglycidether, Propylenglycoldiglycidether, Polypropylenglycoldiglycidether, Bisphenol-A-diglycidether, Bisphenol-F-diglycidether, Epoxidharze auf der Basis von Bisphenol-A, Epoxidharze auf Basis von Bisphenol-F und Epoxidharze auf Basis von Bisphenol-A/F. Konkrete Beispiele für organische Verbindungen mit mindestens zwei Aminogruppen sind 1,3-Diaminopentan, 1,5-Diamino-2-methylpentan, 1,4-Diaminocyclohexan, 1,6-Diaminohexan, Diethylendiamin, Triethylentetramin oder Isophorondiamin. Selbstverständlich können auch organische Verbindungen eingesetzt werden, die verschiedene funktionelle Gruppen tragen.

Als Starter oder Vernetzungsinitiator kommen alle dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestern, Alkylperoxiden, Perketalen, Ketonperoxiden und Alkylhydroperoxiden sowie Azo-Verbindungen. Als konkrete Beispiele wären hier insb. Dibenzoylperoxid, tert-Butylperbenzoat und Azobisisobutyronitril zu nennen.

Ein Beispiel für einen kationischen Photostarter ist Cyracure® UVI-6974, während ein bevorzugter kationischer Thermostarter 1-Methylimidazol ist.

Diese Starter werden in den üblichen, dem Fachmann bekannten Mengen eingesetzt, vorzugsweise 0,01 - 5 Gew.-%, insb. 0,1 - 3 Gew.-%, bezogen auf den Gesamt-Feststoffgehalt der Beschichtungszusammensetzung.

Beispiele für geeignete Lösungsmittel sind Alkohole, vorzugsweise niedere aliphatische Alkohole, wie Methanol, Ethanol, 1-Propanol, i-Propanol und 1-Butanol, Ketone, vorzugsweise niedere Dialkylketone wie Aceton und Methylisobutylketon, Ether, vorzugsweise niedere Dialkylether, wie Diethylether, Dibutylether und THF, Isopropoxyethanol, aromatische Kohlenwasserstoffe, wie Toluol, Ester, wie Essigsäureethylester, Butoxyethanol, Sulfoxide, Sulfone, Amide wie Dimethylformamid und deren Gemische. Prinzipiell muß kein Lösungsmittel eingesetzt werden, insb. dann, wenn die Hydrolyse der hydrolysierbaren Silane zur Bildung von Alkoholen, wie z.B. den vorstehend genannten, führen. Selbstverständlich kann aber auch dann ein Lösungsmittel eingesetzt werden.

Die Hydrolyse oder (Vor) kondensation der hydrolysierbaren Verbindungen erfolgt insb. nach dem Sol-Gel-Verfahren. Das Sol-Gel-Verfahren ist ein dem Fachmann geläufiges Verfahren. Die Hydrolyse oder Kondensation wird entweder in Abwesenheit eines Lösungsmittels oder vorzugsweise in einem wäßrigen oder wäßrig/organischen Reaktionsmedium, ggf. in Gegenwart eines sauren oder basischen Kondensationskatalysators wie HCl, HNO₃ oder NH₃ durchgeführt. Man erhält eine partielle Hydrolyse oder (Poly)kondensation der hydrolysierbaren Verbindungen (Hydrolysat oder Vorkondensat). Der Kondensationsgrad kann ebenso wie die Viskosität, z.B. durch das Lösungsmittel, in zweckmäßiger Weise eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben. Das so erhaltene Sol wird als Beschichtungszusammensetzung eingesetzt, zu der ggf. weitere Komponenten, wie z.B. die Kupfer- oder Silberkomplexverbindungen oder die nanoskaligen Teilchen, in beliebiger Reihenfolge zugegeben werden. Solche Komponenten können auch vor oder während der Hydrolyse oder Vorkondensation mit den hydrolysierbaren Verbindungen gemischt werden. Es besteht auch die Möglichkeit, daß zuerst eine hydrolysierbare Verbindung hydrolysiert oder vorkondensiert wird und weitere einsetzbare hydrolysierbare Verbindung, z.B. Fluorsilane, erst später zugegeben werden.

Die Beschichtungszusammensetzung kann auf jede übliche Weise auf die Otoplastik aufgetragen werden. Hierbei können alle gängigen naßchemischen Beschichtungsverfahren eingesetzt werden. Beispiele sind Schleuderbeschichten, (Elektro)tauchbeschichten, Rakeln, Sprühen, Spritzen, Spinnen, Ziehen, Schleudern, Gießen, Rollen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint. Die Menge der aufgetragenen Beschichtungszusammensetzung wird so gewählt, daß die gewünschte Schichtdicke erzielt wird. Beispielsweise wird so gearbeitet, dass Trockenschichtdicken im Bereich von 1 bis 15 µm und bevorzugt 2 bis 5 µm erhalten werden. Ein Vorteil bei der vorliegenden Erfindung ist die variabel einstellbare Schichtdicke. Nach Aufbringung der Beschichtungszusammensetzung erfolgt ggf. eine Trocknung, z.B. bei Umgebungstemperatur (unter 40°C).

Die ggf. vorgetrocknete Beschichtung wird im allgemeinen einer Behandlung mit Wärme und/oder Strahlung unterworfen, um die Beschichtung zu härten. In einer bevorzugten Ausführungsform erfolgt die Härtung durch Bestrahlung. Zur Bestrahlung werden aktinische Strahlung, z. B. UV- oder Laserstrahlung, oder Elektronenstrahlen, verwendet. Besonders bevorzugt werden zur Bestrahlung UV-Strahlung oder Blaulicht, wie es im Dentalbereich verwendet wird, eingesetzt. Durch die Bestrahlung können eingesetzte Kupfer- oder Silberverbindungen in Kupfer- oder Silberkolloide überführt werden.

Es hat sich ergeben, daß die Kolloide in der Beschichtungszusammensetzung überraschenderweise auch bereits bei recht niedrigen Temperaturen aus den Kupfer- oder Silberverbindungen gebildet werden. Die Bildung der Kolloide beginnt insb. bei Temperaturen von unter 200°C, insb. unter 130°C, unter 100°C und sogar bereits unter 80°C, im allgemeinen ist eine Temperatur von mehr als 50°C notwendig, sofern keine Bestrahlung durchgeführt wird. Die Kolloidbildung beginnt z.B. bei einer Wärmebehandlung im Bereich von 50 bis 100°C, bevorzugt von 60 bis 80°C bzw. 70 bis 80°C. Eine solche Wärmebehandlung der Beschichtungszusammensetzung kann in einer bevorzugten Ausführungsform auch vor Auftrag der Beschichtungszusammensetzung erfolgen, um die Kolloidbildung einzuleiten oder zu vervollständigen. Bei der anschließenden Behandlung der aufgetragenen Beschichtung mit Wärme oder vorzugsweise Strahlung kann die Kolloidbildung fortgesetzt werden, wenn sie noch nicht vervollständigt war.

Es können größere Kolloide, z.B. mit 5 - 20 nm, insb. 10 - 20 nm Durchmesser, gebildet werden. die eine hohe Langzeitwirkung haben. Überraschenderweise hat sich gezeigt, daß durch Strahlung und/oder Wärmebehandlung Kupfer- oder Silberkolloide mit einem Durchmesser von z.B. 10 bis 30 nm besonders rasch gebildet werden. Die Menge an in der Beschichtungszusammensetzung eingesetzter Kupfer- oder Silberverbindung richtet sich nach der gewünschten Konzentration an Kolloiden in der Beschichtung, die z.B. mehrere Gew.-% betragen kann.

Die Härtung der Beschichtungszusammensetzung kann ggf. auch durch Wärmebehandlung bei Temperaturen von unter 300°C, bevorzugt nicht mehr als 200°C und insb. nicht mehr als 130°C erfolgen. Bevorzugt sind Temperaturen, die sich auch für die oben erläuterte Kolloidbildung eignen, z.B. unter 100°C oder unter 80°C, z.B. 50 bis 100°C oder 60 bis 80°C. Selbstverständlich führt diese Wärmebehandlung ebenfalls zur Kolloidbildung, sofern diese nicht bereits gebildet worden sind.

Durch die Bildung der Kolloide durch Bestrahlung und/oder relativ niedrige Temperaturen kann in vorteilhafter Weise ein schnelles Aushärten der Beschichtung vermieden werden, so daß den Kolloiden Zeit zur Bildung gegeben wird. Andererseits finden bei der Strahlungs- und/oder Wärmebehandlung zur Bildung der Kolloide Kondensationsprozesse und/oder Vernetzungsreaktionen in der Beschichtung statt, die zu einer erhöhten Viskosität führen, was zur Stabilisierung der Kolloide beiträgt.

Es wird eine Beschichtung mit einer organisch modifizierten anorganischen Matrix erhalten, d.h. neben dem anorganischen Matrixgrundgerüst sind auch organische Seitengruppen vorhanden, die ggf. und bevorzugt untereinander oder über organische Verbindungen vernetzt sind. Die organischen Seitengruppen sind zumindest zum Teil fluoriert und/oder in der Matrix sind Kupfer- oder Silberkolloide enthalten, wobei eine Kombination beider Merkmale zu einer besonders effektiven Biofilm-hemmenden Beschichtung führt, die eine stark biozide Wirkung auch über längere Zeiträume, besonders in Verbindung mit flüssigen Medien, und ausgezeichnete Antihafteigenschaften besitzt.

Die folgenden Beispiele erläutern die Erfindung, ohne sie zu beschränken.

### Beispiele:

### 1. Herstellung eines Basishydrolysats

In einem 11-Dreihalskolben mit Thermometer, Rührer und Rückflußkühler wurden 248,4 g (1 mol) 3-Methacryloxypropyltrimethoxysilan (MPTS) vorgelegt, unter Rühren mit 99,36 g Essigsäure-stabilisiertem AlO (OH) (Boehmit, Sol P3, Fa. Condea) versetzt und 10 min suspendiert (Verhältnis MPTS-Oxid/AlO(OH) = 1,8). Anschließend wurde das Gemisch auf 90°C erhitzt und weitere 15 min gerührt. Dann wurden 35,95 g (2 mol) destilliertes Wasser langsam unter Rühren hinzugefügt und das Gemisch auf 100°C erhitzt. Nach etwa 5 - 10 min schäumte das Reaktionsgemisch stark (Methanol), woraufhin das Reaktionsgemisch, gerechnet ab dem Zeitpunkt der Wasserzugabe, 2,5 h unter Rühren bei 100°C Ölbadtemperatur unter Rückfluß erwärmt wurde. Dann wurde auf Raumtemperatur abgekühlt und durch ein 1 µm-Membranfilter (Celluloseacetat) mit Glasfaser-Vorfilter druckfiltriert und bis zur weiteren Verwendung bei -18°C aufbewahrt.

### 2. Herstellung einer AgNO₃-Lösung

In einem 100 ml Rundkolben wurden 27,0 g Ethanol vorgelegt und mit 1,28 g (7,5 mmol) AgNO₃ versetzt. Das Gemisch wurde 30 min bei Raumtemperatur gerührt und mit 14,0 g 2-Propanol sowie 3,0 g Aceton versetzt. Die AgNO₃-Lösung wurde bis zum Einsatz unter UV-Lichtausschluss bei Raumtemperatur gerührt.

### 3. Lack 1

Zu 100 g des filtrierten Basishydrolysats wurden 143 g 1-Butanol sowie 12,9 g 1,6-Hexandioldimethacrylat (HDDMA) hinzugefügt und 15 min kräftig gerührt. Anschließend wurden 1,3 g Verlaufsmittel BYK® 306, Photoinitiator Irgacure® 819 (8,3 g; 5,5 mol-%/mol Doppelbindung) sowie 2,6 g Fluorsilan (Dynasil® F8261) hinzugegeben und 24 h unter Ausschluss von UV-Strahlung gerührt. Die einzelnen Komponenten sind in Tabelle 1 und die Gewichtsanteile der Komponenten in Tabelle 2 aufgeführt.

### 4. Lack 2

In einem 500 ml Dreihalskolben mit Rückflusskühler wurden unter Rühren 100 g des Basishydrolysats mit 122,3 g 1-Butanol homogenisiert. Dann wurde das Gemisch mit 23,5 g der hergestellten AgNO₃-Lösung versetzt und auf eine Ölbadtemperatur von 60°C erwärmt. Nach 10 min wurde zum Gemisch unter starkem Rühren tropfenweise 0,72 g N-(2-Aminoethyl)-3-aminopropyltrimethoxysilan gegeben, wobei das Gemisch sich langsam braun färbte. Die Reaktionslösung wurde 24 h bei 60°C gerührt. Nach Abkühlen auf Raumtemperatur wurden 12,9 g 1,6-Hexandioldimethacrylat, 1,3 g Verlaufsmittel Byk 306 und 8,3 g (5,5 mol-%/mol Doppelbindungen) Photoinitiator Irgacure 819 sowie 2,5 g Fluorsilan (Dynasil F 8261) zugegeben und unter Ausschluss von UV-Licht 24 h gerührt. Die einzelnen Komponenten sind in Tabelle 1 und die Gewichtsanteile der Komponenten in Tabelle 2 aufgeführt.

**Tabelle 1**

| | Beschichtungssystem | |
|---|---|---|
| | Lack 1 | Lack 2 |
| Feststoffgehalt [Gew.-%] | 35 | 35 |
| Basishydrolysat | 100 g | 100 g |
| 1-Butanol | 143,4 g | 122,3 g |
| Comonomer (HDDMA) | 12,9 g | 12,9 g |
| Fluorsilan | 2,6 g | 2,5 g |
| AgNO₃-Lösung | --- | 23,5 g |
| Byk 306 | 1,3 g | 1,3 g |
| Photoinitiator | 8,3 g | 8,3 g |

**Tabelle 2: Gewichtsanteile der Komponenten im gebrauchsfertigen Lack**

| | Beschichtungssystem Anteil der Komponenten Gew.-% | |
|---|---|---|
| | Lack 1 | Lack 2 |
| MPTS-Oxid | 17,4 | 17,2 |
| AlO(OH) | 9,2 | 9,1 |
| Essigsäure | 0,5 | 0,5 |
| Wasser | 3,4 | 3,4 |
| Methanol | 9,3 | 9,2 |
| 1-Butanol | 53,4 | 45,0 |
| Ethanol | --- | 5,2 |
| 2-Propanol | --- | 2,7 |
| Aceton | --- | 0,6 |
| Ag | --- | 0,2 |
| DIAMO | --- | 0,3 |
| Fluorsilan | 1,0 | 0,9 |
| Irgacure 819 | 3,1 | 3,1 |

### 5. Beschichtungen auf PMMA-Blend-Material

Die beschriebenen Lacke 1 und 2 wurden mit einem Pinsel auf ein PMMA-Blend-Material aufgetragen. Nach Untersuchung der Verlaufseigenschaften und einigen mechanischen Tests (z.B. Wasser- bzw. Schweißbeständigkeitstests, Abriebbeständigkeit) wurden die Lacke auf In-Ohr-Hörschalen aufgebracht. Für weitere Tests (z.B. Bürsten- oder Crockmetertest) wurden die Beschichtungen auf PMMA-Blend-Platten aufgebracht.

### 6. Beschichtung auf Polycarbonat-Platten

Die beschriebenen Lacke 1 und 2 wurden für eine homogene Beschichtungsoberfläche (z.B. für Kontaktwinkelmessungen) mit einem Schleuderverfahren auf planare Polycarbonat-Platten (5 x 5 cm; Dicke 3 mm) aufgetragen. Bei einer Drehzahl von 800 U/min und einer Schleuderdauer von 10 s ergaben sich Schichtdicken zwischen 4 - 6 µm (nach Polymerisation).

### 7. Härtung der Lacke

Die Substrate waren mit einer Grundierung aus einem gewöhnlichen Lack versehen. Die Härtung der Grundierung und der Lacke 1 und 2 erfolgte mit Blaulicht (Härtungsanlage von Dreve, Modell Polylux 2 x 11 W). Die Grundierung wurde nach einer Ablüftzeit von 10 min (Ablüfttemperatur: 22°C) 6 min bei Normalatmosphäre gehärtet. Die Lacke 1 und 2 wurden nach einer Ablüftzeit von 10 min (Ablüfttemperatur: 22°C) 2 min unter Argon-Atmosphäre gehärtet.

## Patentansprüche

1. Hörgerät oder Hörgeräteteil zum Einsatz in den Gehörgang und/oder in bzw. hinter die Ohrmuschel eines Trägers, mit einer Biofilm-hemmenden Beschichtung aus einem mit organischen Gruppen modifizierten anorganischen Kondensat auf Basis einer Beschichtungszusammensetzung, die ein Hydrolysat oder Vorkondensat aus einer oder mehreren hydrolysierbaren Verbindungen mit mindestens einem nicht-hydrolysierbaren Substituenten umfaßt, wobei zumindest ein Teil der organischen Gruppen des Kondensats Fluoratome aufweist und/oder Kupfer- oder Silberkolloide in der Beschichtung enthalten sind.

2. Hörgerät oder Hörgeräteteil nach Anspruch 1,
**dadurch gekennzeichnet,**
**daß** das Hörgerät oder Hörgeräteteil zumindest an den beschichteten Teilen eine Kunststoffoberfläche aufweist oder aus Kunststoff besteht.

3. Hörgerät oder Hörgeräteteil nach Anspruch 1 oder 2,
**dadurch gekennzeichnet,**
**daß** der Kunststoff Polymethylmethacrylat ist.

4. Hörgerät oder Hörgeräteteil nach mindestens einem der Ansprüche 1 bis 3,
**dadurch gekennzeichnet,**
**daß** die Otoplastik unter der Biofilm-hemmenden Beschichtung eine Grundbeschichtung aufweist.

5. Hörgerät oder Hörgeräteteil nach mindestens einem der Ansprüche 1 bis 4,
**dadurch gekennzeichnet,**
**daß** die hydrolysierbaren Verbindungen ein oder mehrere hydrolysierbare Silane mit mindestens einem nicht-hydrolysierbaren Substituenten umfassen.

6. Hörgerät oder Hörgeräteteil nach mindestens einem der Ansprüche 1 bis 5,
**dadurch gekennzeichnet,**
**daß** die hydrolysierbaren Verbindungen ein oder mehrere Silane der allgemeinen Formel (I)
RₐSiX₍₄₋ₐ₎ (I)
umfassen, worin die Reste R gleich oder verschieden sind und nicht-hydrolysierbare Gruppen darstellen, die Reste X gleich oder verschieden sind und hydrolysierbare Gruppen oder Hydroxylgruppen bedeuten und a den Wert 1, 2 oder 3 hat.

7. Hörgerät oder Hörgeräteteil nach mindestens einem der Ansprüche 1 bis 6,
**dadurch gekennzeichnet,**
**daß** die hydrolysierbaren Verbindungen ein oder mehrere Silane umfassen, die mindestens einen nicht-hydrolysierbaren Rest aufweisen, der eine funktionelle Gruppe, insb. eine Kohlenstoff-Kohlenstoff-Doppelbindung, umfaßt, über die eine Vernetzung möglich ist.

8. Hörgerät oder Hörgeräteteil nach mindestens einem der Ansprüche 1 bis 7,
**dadurch gekennzeichnet,**
**daß** die hydrolysierbaren Verbindungen ein oder mehrere Silane der allgemeinen Formel (II)
Rf(R)_{b}SiX_{(3-b)} (II)
umfassen, worin X und R wie in Formel (I) definiert sind, Rf eine nicht-hydrolysierbare Gruppe ist, die 1 bis 30 Fluoratome an Kohlenstoffatome gebunden aufweist, und b 0, 1 oder 2 ist.

9. Hörgerät oder Hörgeräteteil nach einem der Ansprüche 1 bis 8,
**dadurch gekennzeichnet,**
**daß** die Beschichtungszusammensetzung Kupfer- oder Silberverbindungen, vorzugsweise Kupfer- oder Silberkomplexverbindungen, enthält.

10. Hörgerät oder Hörgeräteteil nach mindestens einem der Ansprüche 1 bis 9,
**dadurch gekennzeichnet,**
**daß** die Beschichtungszusammensetzung nanoskalige anorganische Teilchen enthält.

11. Hörgerät oder Hörgeräteteil nach mindestens einem der Ansprüche 1 bis 10,
**dadurch gekennzeichnet,**
**daß** die Biofilm-hemmende Beschichtung erhältlich ist durch Aufbringen der Beschichtungszusammensetzung auf mindestens einen Teil der Oberfläche des Hörgeräts oder Hörgeräteteils und Behandlung mit Wärme und/oder Strahlung, vorzugsweise Strahlung.

12. Hörgerät oder Hörgeräteteil nach mindestens einem der Ansprüche 1 bis 11,
**dadurch gekennzeichnet,**
**daß** in der Beschichtungszusammensetzung enthaltene Kupfer- oder Silberverbindungen durch Behandlung mit Wärme und/oder Strahlung in Kupfer- oder Silberkolloide überführt werden.

13. Hörgerät oder Hörgeräteteil nach mindestens einem der Ansprüche 1 bis 12,
**dadurch gekennzeichnet,**
**daß** die Biofilm-hemmende Beschichtung erhältlich ist durch Aufbringen der Beschichtungszusammensetzung, die eine Kupfer- oder Silberverbindung umfaßt, und Behandlung mit Wärme und/oder Strahlung unter Bildung der kupfer- oder silberkolloidhaltigen Beschichtung.

14. Hörgerät oder Hörgeräteteil nach mindestens einem der Ansprüche 1 bis 13,
**dadurch gekennzeichnet,**
**daß** ein Teil der organischen Gruppen des Kondensats Fluoratome aufweist und außerdem Kupfer- oder Silberkolloide in der Beschichtung enthalten sind

## Revendications

1. Prothèse auditive ou pièce de prothèse auditive à placer dans le conduit auditif et / ou dans le pavillon de l'oreille d'un porteur, avec un revêtement antibiofilm à partir d'un condensat anorganique, modifié avec des groupes organiques, sur la base d'une composition de revêtement qui comprend un hydrolysat ou un précondensat à partir d'un ou de plusieurs composés hydrolysables, avec au moins un substituant non-hydrolysable, au moins une partie des groupes organiques du condensat présentant des atomes de fluor et / ou des colloïdes de cuivre ou d'argent étant contenus dans le revêtement.

2. Prothèse auditive ou pièce de prothèse auditive selon la revendication 1,
**caractérisée en ce que**
la prothèse auditive ou la pièce de prothèse auditive présente, au moins sur les parties revêtues, une surface en matière synthétique, ou consiste en matière synthétique.

3. Prothèse auditive ou pièce de prothèse auditive selon la revendication 1 ou la revendication 2,
**caractérisée en ce que**
la matière plastique est un polyméthylméthacrylate.

4. Prothèse auditive ou pièce de prothèse auditive selon l'une des revendications 1 à 3,
**caractérisée en ce que**
l'otoplastique présente une couche primaire sous le revêtement anti-biofilm.

5. Prothèse auditive ou pièce de prothèse auditive selon l'une des revendications 1 à 4,
**caractérisée en ce que**
les composés hydrolysables comprennent un ou plusieurs silanes hydrolysables avec au moins un substituant non-hydrolysable.

6. Prothèse auditive ou pièce de prothèse auditive selon l'une des revendications 1 à 5,
**caractérisée en ce que**
les composés hydrolysables comprennent un ou plusieurs silanes de la formule générale (I)
RₐSiX₍₄₋ₐ₎ (I)
les restes R étant identiques ou différents et représentant des groupes non-hydrolysables, les restes X étant identiques ou différents et signifiant des groupes hydrolysables ou des groupes hydroxy, et a valant 1 2 ou 3.

7. Prothèse auditive ou pièce de prothèse auditive selon l'une des revendications 1 à 6,
**caractérisée en ce que**
les composés hydrolysables comprennent un ou plusieurs silanes qui présentent au moins reste non-hydrolysable qui comprend un groupe fonctionnel, en particulièrement une liaison double carbone-carbone, par l'intermédiaire duquel une réticulation est possible.

8. Prothèse auditive ou pièce de prothèse auditive selon l'une des revendications 1 à 7,
**caractérisée en ce que**
les composés hydrolysables comprennent un ou plusieurs silanes de la formule générale (II)
Rf(R)_{b}SiX_{(3-b)} (II)
X et R étant définis comme dans la formule (I), Rf étant un groupe non-hydrolysable qui présente 1 à 30 atomes de fluor liés à des atomes de carbone, et b valant 0, 1 ou 2.

9. Prothèse auditive ou pièce de prothèse auditive selon l'une des revendications 1 à 8,
**caractérisée en ce que**
la composition de revêtement contient des composés de cuivre ou d'argent, préférentiellement des composés complexes de cuivre ou d'argent.

10. Prothèse auditive ou pièce de prothèse auditive selon au moins l'une des revendications 1 à 9,
**caractérisée en ce que**
la composition de revêtement contient des particules anorganiques nanométriques.

11. Prothèse auditive ou pièce de prothèse auditive selon au moins l'une des revendications 1 à 10,
**caractérisée en ce que**
le revêtement anti-biofilm peut être obtenu par l'application de la composition de revêtement sur au moins une partie de la surface de la prothèse auditive ou de pièces de la prothèse auditive et traitement thermique et /ou rayonnement, préférentiellement par rayonnement.

12. Prothèse auditive ou pièce de prothèse auditive selon au moins l'une des revendications 1 à 11,
**caractérisée en ce que**
les composés de cuivre ou d'argent, contenus dans la composition de revêtement sont transformés en colloïdes de cuivre ou d'argent par traitement thermique et / ou par rayonnement.

13. Prothèse auditive ou pièce de prothèse auditive selon au moins l'une des revendications 1 à 12,
**caractérisée en ce que**
le revêtement anti-biofilm est obtenu par l'application de la composition de revêtement, contenant un composé de cuivre ou d'argent, et par traitement thermique et / ou rayonnement, en formant un revêtement contenant des colloïdes de cuivre ou d'argent.

14. Prothèse auditive ou pièce de prothèse auditive selon au moins l'une des revendications 1 à 13,
**caractérisée en ce que**
une partie des groupes organiques du condensat présente des atomes de fluor, et qu'en outre des colloïdes de cuivre ou d'argent sont contenus dans le revêtement.

## Claims

1. Hearing instrument or hearing instrument part for use in the auditory canal and/or in or behind the auricle of a wearer, with a biofilm-retarding coating of an inorganic condensate modified with organic groups and based on a coating composition which comprises a hydrolysate or pre-condensate of one or more hydrolysable compounds with at least one non-hydrolysable substituent, wherein at least one part of the organic groups of the condensate has fluorine atoms and/or copper or silver colloids are contained in the coating.

2. Hearing instrument or hearing instrument part according to claim 1,
**characterised in that**
the hearing instrument or hearing instrument has a plastics surface on at least the coated parts or consists of plastics.

3. Hearing instrument or hearing instrument part according to claim 1 or 2,
**characterised in that**
the plastics is polymethylmethacrylate.

4. Hearing instrument or hearing instrument part according to at least one of claims 1 to 3,
**characterised in that**
the otoplastic has a base coating underneath the biofilm-retarding coating.

5. Hearing instrument or hearing instrument part according to at least one of claims 1 to 4,
**characterised in that**
the hydrolysable compounds comprise one or more hydrolysable silanes with at least one non hydrolysable substituent.

6. Hearing instrument or hearing instrument part according to at least one of the claims 1 to 5,
**characterised in that**
the hydrolysable compounds comprise one or more silanes of the general formula (I)
RₐSiX₍₄₋ₐ₎ (I)
in which the residues R are the same or different and represent non-hydrolysable groups, the residues X are the same or different and denote hydrolysable groups or hydroxyl groups and a has the value 1, 2 or 3.

7. Hearing instrument or hearing instrument part according to at least one of claims 1 to 6,
**characterised in that**
the hydrolysable compounds comprise one or more silanes which have at least one non-hydrolysable residue which comprises a function group, more particularly a carbon-carbon double bond through which cross-linking is possible.

8. Hearing instrument or hearing instrument part according to at least one of claims 1 to 7
**characterised in that**
the hydrolysable compounds comprise one or more silanes of the general formula (II)
Rf(R)_{b}SiX_{(3-b)} (II)
in which X and R are as defined in formula (I), Rf is a non-hydrolysable group which has 1 to 30 fluorine atoms bonded to carbon atoms, and b is 0, 1 or 2.

9. Hearing instrument or hearing instrument part according to one of claims 1 to 8,
**characterised in that**
the coating composition contains copper or silver compounds, preferably copper or silver complex compounds.

10. Hearing instrument or hearing instrument part according to at least one of claims 1 to 9,
**characterised in that**
the coating composition contains nanoscale inorganic particles.

11. Hearing instrument or hearing instrument part according to at least one of claims 1 to 10,
**characterised in that**
the biofilm-retarding coating is obtainable by applying the coating composition to at least one part of the surface of the hearing instrument or hearing instrument part and treating it with heat and/or radiation, preferably radiation.

12. Hearing instrument or hearing instrument part according to at least one of claims 1 to 11,
**characterised in that**
copper or silver compounds contained in the coating composition are changed by treatment with heat and/or radiation into copper or silver colloids.

13. Hearing instrument or hearing instrument part according to at least one of claims 1 to 12,
**characterised in that**
the biofilm-retarding coating is obtainable by applying the coating composition which comprises a copper or silver compound, and treating it with heat and/or radiation to form the copper- or silver- colloid-containing coating.

14. Hearing instrument or hearing instrument part according to at least one of claims 1 to 13,
**characterised in that**
a part of the organic groups of the condensate has fluorine atoms and furthermore copper or silver colloids are contained in the coating.
